# EUROPÄISCHE PATENTANMELDUNG

(11) **EP 2 003 015 A2**
(43) Veröffentlichungstag der Anmeldung: **17.12.2008**
(21) Anmeldenummer: 08001477.2
(22) Anmeldetag: 26.01.2008
(51) Int. Cl.: B60N 2/46

(54) **Verstellbare Seitenarmlehne**

(30) Priorität: 12.06.2007 DE 102007027611
(71) Anmelder: BOS GmbH & Co. KG, 73760 Ostfildern (DE)
(72) Erfinder: Röhr, Matthias, 40822 Mettmann (DE); Seitzler, Wolfgang, 42111 Wuppertal (DE); Faber, Wolfgang, 42659 Solingen (DE)
(74) Vertreter: Rüger, Barthelt & Abel Patentanwälte

(57) **Zusammenfassung**

Eine Seitenarmlehne für Kraftfahrzeuge weist eine Führungseinrichtung auf, mit der das Armauflagepolster im Wesentlichen in vertikaler Richtung verstellbar ist. In der Führungseinrichtung ist eine Antriebseinrichtung integriert, mit der die Höhenverstellung elektromotorisch bewerkstelligt wird. Die Antriebseinrichtung und die Führungseinrichtung sitzen außerhalb des Türkorpus in einer Gehäuseschale, die gleichzeitig abschnittsweise die Armauflagefläche bildet.

## Beschreibung

Die vorderen Seitentüren von PKWs sind üblicherweise mit Armlehnen ausgestattet, die auf der dem Fahrgastraum zugekehrten Seite der Innenverkleidung angebracht sind. Die Armlehnen sind an der Seitenverkleidung fix, womit sie nur für Personen mit der passenden Körpergröße eine komfortable Armunterstützung bringen können. Menschen, die viel größer oder viel kleiner sind, können die Seitenarmlehne nicht benutzen.

Ausgehend hiervon ist es Aufgabe der Erfindung eine höhenverstellbare Seitenarmlehne zu schaffen.

Diese Aufgabe wird erfindungsgemäß durch eine Seitenarmlehne mit den Merkmalen des Anspruches 1 gelöst.

Die neue Seitenarmelehne für Kraftfahrzeuge weist ein Armauflagepolster auf, das neben der Innenseite der Tür angeordnet ist. Es ist wenigstens eine Führungsanordnung vorhanden, die das Armauflagepolster mit den tragenden Teilen der Fahrzeugtür oder der Innenseite verbindet. Die Führungsanordnung ist derart ausgeführt, dass das Armauflagepolster neben der Innenseite der Tür in der Höhe verstellbar ist.

Zum Verkleiden der Führungsanordnung ist eine Gehäuseanordnung vorgesehen, die außerhalb des Türkorpus und neben der Innenverkleidung angeordnet ist. An der Gehäuseanordnung ist das Armauflagepolster befestigt.

Dadurch wird erreicht, dass mit dem Verstellen des Armauflagepolsters sich auch die Lage der Gehäuseanordnung an der Innenseite der Tür verändert. Ein weiterer Vorteil besteht darin, dass die Führungsanordnung außerhalb des Türkorpus angeordnet werden kann, indem sie letztlich innerhalb der Seitenarmlehne untergebracht wird. Dadurch wird der notorische Platzmangel, der im Inneren des Türkorpus herrscht, umgangen.

Die Seitenarmlehne kann manuell oder elektrisch verstellt werden. Im letzteren Falle ist es von Vorteil, wenn eine selbsthemmende Antriebseinrichtung vorgesehen ist, mit der die Führungsanordnung verstellt werden kann.

Die Führungsanordnung kann sich aus einem Sockel- oder Basisteil und einem gegenüber dem Sockel- oder Basisteil beweglichen Abschnitt zusammensetzen. Zweckmäßigerweise ist der Sockelteil an den tragenden Teilen des Türkorpus befestigt, wozu er gegebenfalls mit entsprechenden Auslegern oder Laschen durch Öffnungen in der Innenverkleidung hindurch ragt.

Ein selbsthemmender Antrieb kann von einer oder mehreren Schraubspindeln gebildet sein.

Eine einfache Ausführung ergibt sich, wenn die Schraubspindeln selbst gleichzeitig als Führungseinrichtung dienen, die die Kippmomente in den Türkorpus einleiten, wenn das Armauflagepolster mit einer Druckkraft beaufschlagt wird.

Eine andere Möglichkeit für eine Führungsanordnung besteht in der Verwendung wenigstens einer Führungssäule, auf der ein Gleiter gleitend geführt ist.

Aus ergonomischen Gründen kann es zweckmäßig sein, wenn die Bewegungsrichtung, die durch die Führungssäulen oder die Schraubspindeln vorgegeben ist, nicht exakt vertikal sondern leicht schräg geneigt verläuft. Dadurch verschiebt sich das Armauflagepolster bei der Höhenverstellung gleichzeitig in Richtung parallel zur Fahrzeuglängsache um in die jeweils günstigste Position gebracht zu werden. Die in der Seitenarmlehne mit untergebrachten Steuerschalter, beispielsweise für die Fensterheber und dergleichen, können damit ebenfalls mitbewegt werden und bleiben in der ergonomisch günstigen Position. Sie können jedoch auch starr an der Innenseite der Tür in einem getrennten Gehäuse untergebracht sein.

Günstige Kräfteverhältnisse ergeben sich, wenn zwei Schraubspindeln verwendet werden, von denen die eine in der Nähe des vorderen Endes und die andere in der Nähe des hinteren Endes des Armauflagepolsters bzw. der Seitenarmlehne angeordnet ist.

Die Schraubspindeln sind zweckmäßigerweise kinematisch miteinander gekuppelt, womit es genügt, lediglich einen Antriebsmotor vorzusehen. Die kinematische Kupplung der Schraubspindeln untereinander und mit dem Antriebsmotor kann über Zahnriemen erfolgen.

Die Gehäuseanordnung kann die Gestalt einer Schale oder eines Bechers haben, deren/dessen Boden zu dem Inneren des Fahrgastraums zeigt, während der Rand das Armauflagepolster bildet oder ein solches trägt.

Eine andere Möglichkeit besteht darin, eine zweiteilige Gehäuseanordnung zu verwenden, wobei ein Teil fest an der Türverkleidung sitzt und ein nach oben offenes Rohr bildet. Dieses Rohr wird von einem weiteren nach unten zeigenden Rohr teleskopartig übergriffen. An dem zweiten Rohr ist das Armauflagepolster befestigt. Die letztgenannte Möglichkeit hat den Vorteil, dass keine nach oben offenen Spalte entstehen, durch die Teile in das Innere fallen können. Außerdem kann so das Armauflagepolster mit einem gewissen Spalt von der Innenverkleidung getrennt angeordnet werden, was hilft, Schleifspuren auf der Innenseite der Türverkleidung zu vermeiden.

Im Übrigen sind Weiterbildungen der Erfindung Gegenstand von Unteransprüchen.

Die nachfolgende Figurenbeschreibung erläutert Aspekte zum Verständnis der Erfindung. Weitere, nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Die Begriffe "oben" und "unten" bzw. "vorne" und "hinten" beziehen sich auf die normale Einbaulage bzw. die Terminologie bei Kraftfahrzeugen.
- Fig. 1: zeigt eine vordere linke Seitentür in einer Draufsicht auf die Innenseite.

- Fig. 2: veranschaulicht in einer perspektivischen Darstellung die Führungs- und die Antriebseinrichtung der Seitenarmlehne in einer perspektivischen Darstellung, mit Blick von der Fahrzeuginnenseite her.
- Fig. 3: zeigt die Anordnung nach Fig. 2 in einer Blickrichtung aus der Sicht des Türkorpus.
- Fig. 4: veranschaulicht das Zusammenwirken der Führungs- und Antriebseinrichtung mit einer Gehäuseanordnung in einer perspektivischen, teilweise aufgebrochenen Darstellung.
- Fig. 5: stellt eine andere Ausführungsform der Gehäuseanordnung mit einem teleskopischen oberen Teil dar, der das Armauflagepolster trägt.

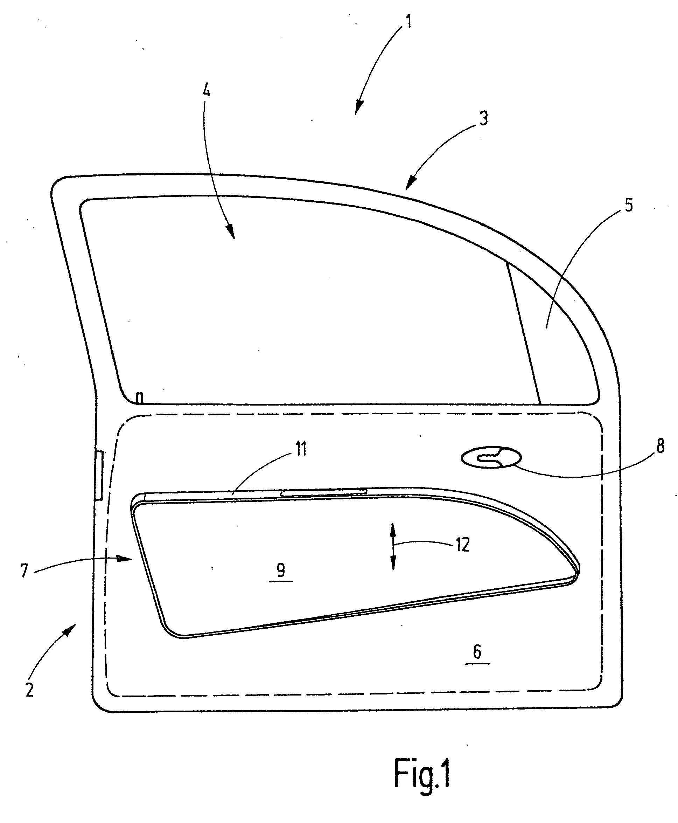

Fig. 1 zeigt in einer Draufsicht die Innenseite einer Fahrertür 1, die sich als Hauptbestandteile aus einem Korpus 2 und einem über den Korpus gespannten Fensterrahmen 3 zusammensetzt. Der Fensterrahmen 3 umschließt eine Fensteröffnung 4 mit einer darin befindlichen nicht erkennbaren Fensterscheibe. Am vorderen Ende der Fensteröffnung 4 befindet sich eine Einsatzplatte 5, an der auf der Außenseite in bekannter Weise der Rückspiegel befestigt ist.

Der Korpus 2 ist zum Fahrgastinnenraum hin mit einer Türverkleidung 6 versehen. Vor der Innenverkleidung 6 befindet sich eine Seitenarmlehnenanordnung 7. Ferner ist ein Türöffnungsgriff 8 zu erkennen.

Zu der Seitenarmlehnenanordnung 7 gehört ein Armlehnengehäuse 9, das auf der Oberseite ein Armlehnenpolster 11 bildet oder trägt. Das Armlehnengehäuse 9 ist in vertikaler Richtung entsprechend dem Doppelpfeil 12 verstellbar, um die Höhe des Armauflagepolsters 11 an eine bequeme Haltung anpassen zu können.

Es ist klar, dass die veranschaulichte Anordnung in der gleichen Weise auch bei der Beifahrertür oder an den hinteren Seitentüren getroffen werden kann. Die Fahrertür ist insoweit lediglich beispielhaft.

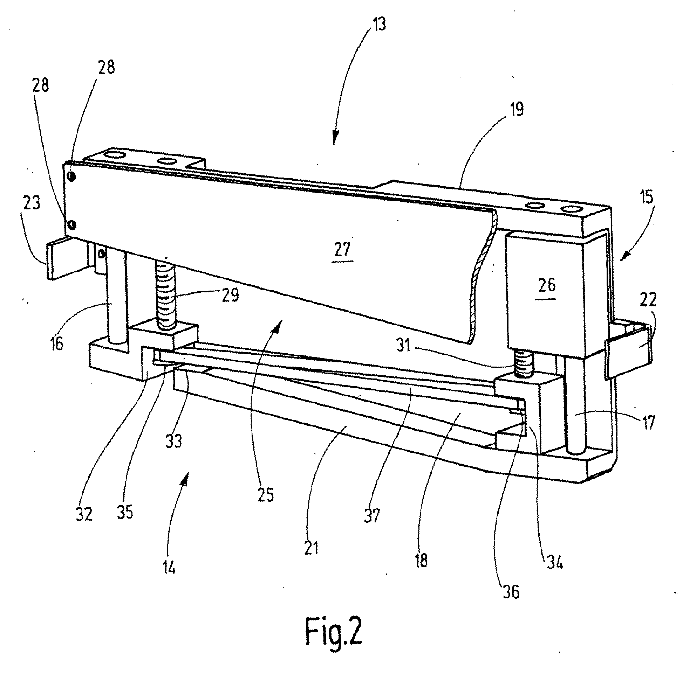

Fig. 2 zeigt eine von dem Gehäuse 9 verdeckte Führungsanordnung 13, wie sie zur Führung der Gehäuseanordnung 9 verwendet wird, um die Höhenverstellung zu bewerkstelligen.

Die Führungsanordnung 13 trägt ferner eine Antriebseinrichtung 14, mit der die elektrische Höhenverstellung ermöglicht wird.

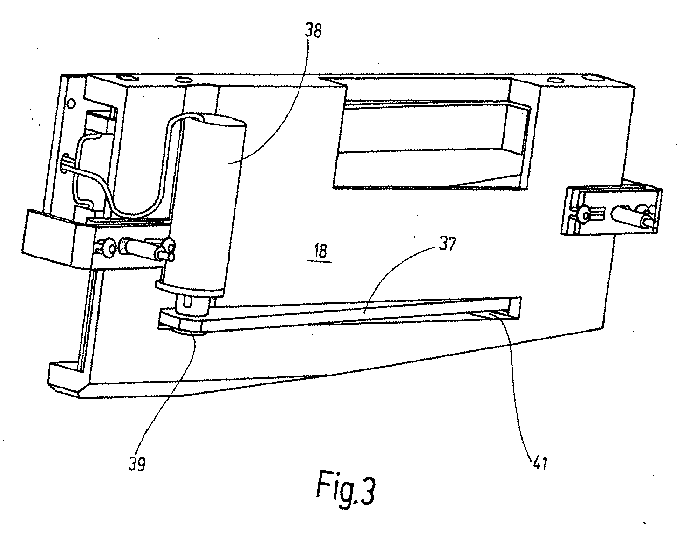

Fig. 3 veranschaulicht die Führungsanordnung 13 mit Blick auf die der Tür 3 zugekehrten Rückseite.

Zu der Führungsanordnung 13 gehören ein Basisteil 15 sowie zwei an dem Basisteil 15 verankerte Führungssäulen 16, 17, die längs des Basisteils 15 voneinander beabstandet sind. Im montierten Zustand befindet sich die Führungssäule 17 in der Nähe des hinteren Endes während die Säule 16 in der Nähe des vorderen Endes angeordnet ist.

Beide Führungssäulen 16, 17 sind zueinander achsparallel und definieren die Bewegungsrichtung, längs derer das Gehäuse 9 verstellbar ist.

Zur Befestigung der Säulen 16, 17 weist das Basisteil 15 eine im Wesentlichen ebene Grundplatte 18 auf, die aufrecht steht. An dem oberen Ende ist eine auf den Betrachter zu auskragende Leiste 19 und an deren unterem Ende eine auf den Betrachter zu auskragende Leiste 21 vorgesehen sind.

Die beiden Führungssäulen 16, 17 stecken in entsprechenden Bohrungen in den Leisten 19, 21.

An der Grundplatte 18 sind ferner Befestigungselemente 22, 23 angebracht, die dazu verwendet werden können, die Grundplatte 18 an tragenden Elementen der Tür 1 zu befestigen, beispielsweise an Trägern, die durch die Innenverkleidung 6 hindurch in den Innenraum des Gehäuses 9 vorstehen.

Die Führungsanordnung 13 umfasst ferner einen Schlitten 25, der mit zwei Gleitern versehen ist, von denen der Gleiter 26 in dem aufgebrochenen Teil sichtbar ist. Die beiden Gleiter 26 laufen auf der jeweils zugehörigen Führungssäule 16, 17, wozu sie entsprechende Durchgangsbohrungen enthalten.

Die beiden Gleiter 26 des Schlittens 25 sind durch eine Verbindungsplatte 27 miteinander verbunden, die beispielsweise mit den Gleitern 26 verschweißt ist oder mit diesen einstückig hergestellt ist.

Der Gleiter 26 ist vereinfacht als Quader gezeigt. Es versteht sich, dass er zur Gewichtsersparnis mit einer entsprechenden Rippenstruktur versehen ist.

An der Verbindungsplatte 27 ist das Gehäuse 9 festgeschraubt, wozu in der Verbindungsplatte 27 Befestigungsöffnungen 28 vorhanden sind, die in Laschen ausgebildet sind, mit denen die Verbindungsplatte 27 nach vorne und nach hinten über die beiden Gleiter 26 übersteht.

Die Antriebseinrichtung 14 enthält bei dem gezeigten Ausführungsbeispiel zwei Schraubspindeln 29 und 31, die achsparallel zu den Führungssäulen 16, 17 angeordnet sind und, wie gezeigt, benachbart sind. Die Gewindespindel 29 ist drehbar in der unteren Leiste 21 gelagert und dort auch axial unverschieblich gehalten. Hierzu enthält die Leiste 21 einen Aufbau mit einer taschenartige Ausnehmung 32, die in Richtung auf die andere Schraubspindel 31 bei 33 offen ist. Die Gewindespindel 29 führt durch eine Gewindebohrung, die achsparallel zu der Bohrung für die Führungssäule 16 in dem betreffenden Gleiter enthalten ist.

Die Gewindespindel 31, die sich neben der Führungssäule 17 befindet, ist in einem U-förmigen Lagerbock 34 gelagert, der sich in Richtung auf die schlitzartige Öffnung 33 öffnet. Mit der Gewindespindel 31 korrespondiert eine entsprechende Gewindebohrung in dem Gleiter 26.

Sowohl auf der Gewindespindel 29 als auch auf der Gewindespindel 31 sitzen unten auf gleicher Höhe drehfest Zahnriemenscheiben 35 und 36, die von einem gemeinsamen endlosen Zahnriemen 37 angetrieben sind.

Auf der Rückseite der Grundplatte 18 ist neben der Gewindespindel 31 ein Getriebemotor 38 vorgesehen, dessen Längsachse parallel zu den Achsen der Führungssäulen 17 ausgerichtet ist. Der Getriebemotor 38 trägt auf seiner Ausgangswelle eine weitere Zahnriemenscheibe 39, um die der Zahnriemen 37 ebenfalls umläuft. Da der Antriebsmotor 38 an der Rückseite bzw. Außenseite der Grundplatte 18 vorgesehen ist, enthält die Grundplatte 18 zum Durchtritt des Zahnriemens eine schlitzartige Öffnung 41, wie dies in der Figur veranschaulicht ist. Die schlitzartige Öffnung beginnt in der Nähe der Zahnriemenscheibe 35 und reicht bis zur Außenumfangsfläche der Zahnriemenscheibe 36, so dass der Zahnriemen 37 ohne zu streifen hindurchtreten kann.

In der Draufsicht bildet der Zahnriemen 37 etwa ein rechtwinkliges Dreieck, wobei die rechtwinklige Spitze bei der Zahnriemenscheibe 37 des Antriebsmotors 38 liegt. Diese Konfiguration ergibt sich aus Lage des Getriebemotors 38 neben der Schraubspindel 31.

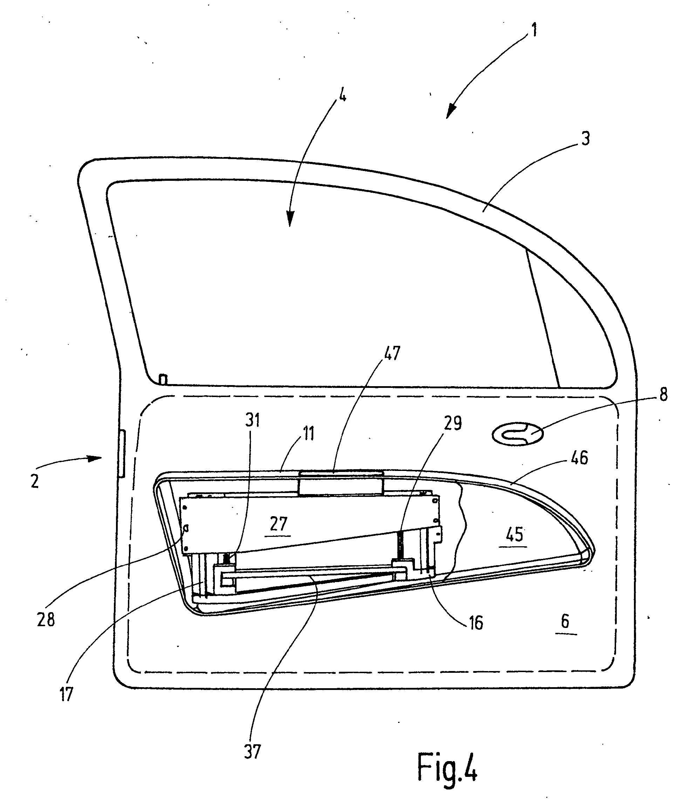

Die Einbaulage der Führungsanordnung 13 mit der Antriebsanordnung 14 ergibt sich aus der Darstellung von Fig. 4. Hiernach sitzt die Führungsanordnung 13 neben der zum Innenraum weisenden Innenseite der Innenverkleidung 6, wobei die Platte 27 des Schlittens 25 zum Innenraum zeigt. Die Führungssäulen 16 und 17 sowie die Gewindespindeln 29 und 31 erstrecken sich zwischen der Platte 27 des Schlittens 25 und einer durch die dem Innenraum benachbarte Fläche der Innenverkleidung 6 definierten Ebene.

Lediglich der auf der Rückseite der Grundplatte 18 aufbauende Getriebemotor 38 ragt in den Innenraum des Türkorpus 2 hinein.

Das Gehäuse 9 ist becher- oder schalenartig gestaltet mit einer Grundfläche 45 und einem in sich geschlossenen umlaufenden Kragen oder Rand 46. Die Grund- oder Bodenfläche 45 liegt etwa parallel zu der Innenverkleidung 6 und ist von dieser entsprechend der Höhe des Randes 46 beabstandet. Die Höhe des Randes 46 entspricht dem Platz, den die Führungseinrichtung 13 in Richtung der Tiefe, gemessen senkrecht zu der Fläche der Innenverkleidung 6, beansprucht.

Wie sich aus der Darstellung von Fig. 4 ergibt, ist die an der Platte 27 des Schlittens 25 befestigte Gehäuseschale 9 in der Nähe des hinteren Endes und in der Nähe des vorderen Endes durch jeweils eine Führungssäule 16, 17 geführt und gleichzeitig in axialer Richtung durch die unmittelbar benachbarten Gewindespindeln 29 und 31 in vertikaler Richtung unterstützt.

Der obere Bereich des Kragens oder Randes 46 kann in bekannter Weise gepolstert sein, um das Armauflagepolster 11 in einem entsprechenden Längsabschnitt zu bilden. Außerdem kann dort benachbart auch eine Griffmulde 47 ausgebildet sein, die in bekannter Weise benutzt wird, um die Tür zwecks Schließens heranzuziehen. Diese Kraft wird ebenfalls über die Gehäuseschale auf die Führungseinrichtung 13 und von dort weiter auf die tragende Struktur der Tür 1 eingeleitet.

Die Funktionsweise ist wie folgt:

Wenn der Benutzer die Höhe der Armauflagefläche 11 verändern will, setzt er durch einen Tastschalter den Getriebemotor 38 in Gang. Hierdurch wird der Zahnriemen 37 angetrieben, der synchron beide Schraubspindeln 29 und 31 antreibt. Je nach Drehrichtung wandert der Schlitten 25 entweder noch oben oder nach unten, je nachdem, ob der Benutzer die Armlehne weiter oben oder weiter unten haben möchte. Beim Erreichen der gewünschten Position lässt der Benutzer den Tastschalter los, womit die Antriebseinrichtung 14 stehen bleibt. Die Anordnung aus den Schraubspindeln 29, 31 mit den Gleitern 26 und dem Getriebemotor 38 ist selbsthemmend in dem Sinne, dass die einmal auf elektrischem Wege eingestellte Höhenposition auch erhalten bleibt, wenn sich der Benutzer mit Kraft auf das Armauflagepolster 11 stützt.

Da die gesamte Antriebseinrichtung 13 in der Gehäuseschale der Seitenarmlehnenanordnung 7 untergebracht ist, befindet sie sich zwangsläufig weitgehend außerhalb des Türkorpus 2, der von der Innenverkleidung 6 und der äußeren Blechhaut begrenzt ist. Die Führungseinrichtung 13 sowie die Antriebseinrichtung 14 erfordern keinen Bauraum innerhalb des Türkorpus 2.

Wegen der Verwendung zweier voneinander beanstandete Schraubspindel 29 und 31, die im Übrigen in einer Ebene liegen, die auch die Achsen der Führungssäulen 16 und 17 enthält und die im Übrigen parallel zu der Innenseite der Innenverkleidung 6 verläuft, ist eine günstige Unterstützung erreicht.

Die offene Seite der Gehäuseschale 9 ist der Innenverkleidung 6 zugekehrt und die Gehäuseschale 9 läuft bei der Höhenverstellung als Ganzes neben der Innenverkleidung 6 nach oben und nach unten.

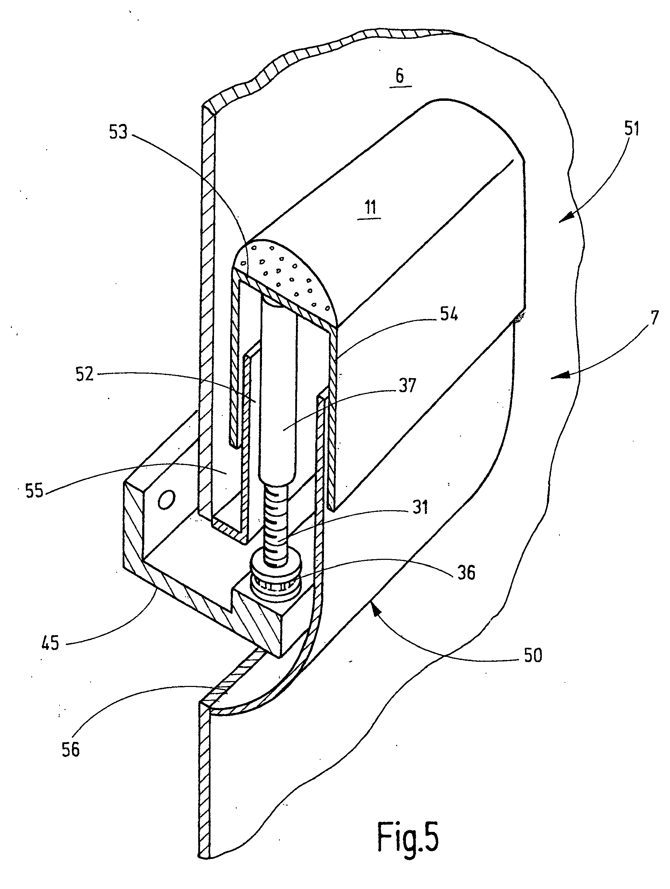

Wenn dies unerwünscht ist, beispielsweise deswegen weil sich der Spalt zwischen dem Rand 46 und der Innenverkleidung 6 schlecht abdichten lässt, kann die Anordnung nach Fig. 5 verwendet werden.

Die Gehäuseanordnung 9 bei dem Ausführungsbeispiel nach Fig. 5 ist zweiteilig. Sie setzt sich aus einem ortsfesten Unterteil 50 und einem beweglichen Oberteil 51 zusammen, das das Armauflagepolster 11 trägt. Das Gehäuseunterteil 50 bildet einen nach oben offenen Rohrabschnitt 52, beispielsweise mit einem rechteckigen Grundriss. Der nach oben offene Rohrabschnitt 51 wird von dem becherartig ausgebildeten Gehäuseoberteil 51 teleskopartig außen übergriffen. Hierzu weist das Gehäuseoberteil 51 einen nach oben zeigenden Boden 53 und einen umlaufenden Kragen oder Rand 54 auf, der im montierten Zustand um den Rohrabschnitt 52 außen herumläuft.

Der Rohrabschnitt 52 ist auf der der Innenverkleidung 6 benachbarten Seite im Abstand angeordnet, wodurch ein Spalt 55 entsteht, in dem mit Spiel der entsprechende Teil des Kragens oder Randes 54 laufen kann.

Im unteren Bereich geht das Gehäuseunterteil 50 in einen Hohlraum über, der, wie gezeigt, eine Öffnung 56 in der Innenverkleidung 6 überdeckt. Durch die Öffnung 56 läuft das Sockelteil 15, das entsprechend Struktur der Tür 1 festgeschraubt ist.

Abweichend von dem vorherigen Ausführungsbeispiel, bei dem eine separater Schlitten 25 vorgesehen ist, der zusätzlich über Führungssäulen 16, 17 geführt ist, übernimmt bei dem Ausführungsbeispiel nach Fig. 5 das Gehäuseoberteil 51 die Funktion des Schlittens. Außerdem entfallen die zusätzlichen Führungssäulen 16, 17. Diese Funktion übernehmen die beiden kerzenartig nach oben zeigenden Schraubspindeln 29 und 31 von denen in Fig. 5 lediglich die eine gezeigt ist. Die andere befindet sich im weggeschnittenen Abschnitt. Der Antrieb erfolgt wiederum über Zahnriemenscheiben 36, wie dies zuvor erläutert ist.

Die Schraubspindel 31 dreht sich in einer Gewindehülse 37, die von der nach unten zeigenden Fläche des Becherbodens 53 in Richtung nach unten zeigt. Die Gewindehülse 37 ist entsprechend knick- und kippsteif verankert. Die Versteifungselemente hierfür sind in der Zeichnung aus Übersichtlichkeitsgründen nicht dargestellt.

Ebenso ist die untere Lagerung der Gewindespindel 31 nicht im Einzelnen veranschaulicht. Es versteht sich für den Fachmann, dass diese Lagerung hinreichend steif ausgeführt sein muss, damit die Biegemomente, die über die Schraubspindel 31 von dem Gehäuseoberteil 51 her eingeleitet werden können, ohne nennenswerte Verbiegung der Schraubspindel 31 in dir tragende Struktur der Tür 1 eingeleitet werden können.

Eine Seitenarmlehne für Kraftfahrzeuge weist eine Führungseinrichtung auf, mit der das Armauflagepolster im Wesentlichen in vertikaler Richtung verstellbar ist. In der Führungseinrichtung ist eine Antriebseinrichtung integriert, mit der die Höhenverstellung elektromotorisch bewerkstelligt wird. Die Antriebseinrichtung und die Führungseinrichtung sitzen außerhalb des Türkorpus in einer Gehäuseschale, die gleichzeitig abschnittsweise die Armauflagefläche bildet.

## Patentansprüche

1. Seitenarmlehne (7) für Kraftfahrzeugtüren, die einen Türkorpus (2) mit einer dem Fahrgastraum zugekehrten Innenverkleidung (6) aufweisen,
mit einem Armauflagepolster (11) neben der Innenseite der Tür (1),
mit wenigstens einer Führungsanordnung (13), die das Armauflagepolster (11) mit der Fahrzeugtür (1) verbindet und die derart ausgeführt ist, dass das Armauflagepolster (11) in der Höhe neben der Innenseite der Tür (1) verstellbar ist, und
mit einer Gehäuseanordnung (9), die dazu eingerichtet ist zumindest die außerhalb des Türkorpus (2) und neben der Innenverkleidung (6) der Tür (1) befindlichen Teile der Führungsanordnung (13) und/oder einer gegebenenfalls vorhandenen Antriebseinrichtung (14) zu verdecken und an der das Armauflagepolster (11) befestigt ist.

2. Armlehne nach Anspruch 1, **dadurch gekennzeichnet, dass** eine selbsthemmenden Antriebseinrichtung (14) zum Verstellen der Führungsanordnung (13) vorgesehen ist.

3. Armlehne nach Anspruch 1, **dadurch gekennzeichnet, dass** das Armauflagepolster (11) mit Abstand neben der Innenseite der Tür (1) angeordnet ist.

4. Armlehne nach Anspruch 1, **dadurch gekennzeichnet, dass** die Führungsanordnung (13) einen Sockelteil (15) und einen gegenüber dem Sockelteil (15) beweglichen Abschnitt (25) aufweist.

5. Armlehne nach Anspruch 1, **dadurch gekennzeichnet, dass** der Sockelteil (15) an den tragenden Teilen des Türkorpus (2) befestigt ist.

6. Armlehne nach Anspruch 1, **dadurch gekennzeichnet, dass** die selbsthemmende Antriebseinrichtung (14) ein Schraubspindeltrieb ist.

7. Armlehne nach Anspruch 1, **dadurch gekennzeichnet, dass** der Schraubtrieb (14) als Führungsanordnung (13) dient.

8. Armlehne nach Anspruch 1, **dadurch gekennzeichnet, dass** die Führungsanordnung (13) wenigstens eine Führungssäule (16,17) aufweist, auf der ein Gleiter (26) geführt ist.

9. Armlehne nach Anspruch 8, **dadurch gekennzeichnet, dass** die Schraubspindel (16,17) des Schraubspindeltriebs (14) mit dem Sockelteil (15) drehbar verbunden ist.

10. Armlehne nach Anspruch 1, **dadurch gekennzeichnet, dass** sich die Führungssäule (16,17) und/oder die Schraubspindel (29.,31) in vertikaler Richtung erstreckt.

11. Armlehne nach Anspruch 1, **dadurch gekennzeichnet, dass** die selbsthemmende Antriebseinrichtung (14) einen Getriebemotor (38) umfasst.

12. Armlehne nach Anspruch 1, **dadurch gekennzeichnet, dass** zwei Schraubspindeln (16,17) vorgesehen sind, von der sich die eine in der Nähe des vorderen Endes und die andere in der Nähe des hinteren Endes des Armauflagepolsters (11) befinden.

13. Armlehne nach Anspruch 1, **dadurch gekennzeichnet, dass** die Schraubspindeln (16,17) kinematisch miteinander gekuppelt sind.

14. Armlehne nach Anspruch 1, **dadurch gekennzeichnet, dass** der Getriebemotor (38) wenigstens eine Schraubspindel (16,17) antreibt.

15. Armlehne nach Anspruch 1, **dadurch gekennzeichnet, dass** zum Antrieb und zur kinematischen Kupplung ein einziger endloser Zahnriemen (37) verwendet wird.

16. Armlehne nach Anspruch 1, **dadurch gekennzeichnet, dass** die Schraubspindel (16,17) oder die Schraubspindeln (16,17) drehfest, jeweils eine Zahnriemenscheibe (35,36) tragen.

17. Armlehne nach Anspruch 1, **dadurch gekennzeichnet, dass** die Ausgangswelle des Getriebemotors (38) eine Zahnriemenscheibe (39) trägt.

18. Armlehne nach Anspruch 1, **dadurch gekennzeichnet, dass** die Führungsanordnung (13) einen Schlitten (25) aufweist.

19. Armlehne nach Anspruch 18, **dadurch gekennzeichnet, dass** der Schlitten (25) mit auf den Schraubspindeln (16,17) laufenden Gewindeteilen (26) des Schraubspindelantriebs (14) gekuppelt ist.

20. Armlehne nach Anspruch 1, **dadurch gekennzeichnet, dass** die Gehäuseanordnung (9) die Form eines Bechers oder einer Schale mit einem Boden (45) und einem umlaufenden Rand (46) aufweist.

21. Armlehne nach Anspruch 21, **dadurch gekennzeichnet, dass** der Rand (46) in einem Bereich das Armauflagepolster (11) bildet oder trägt.

22. Armlehne nach Anspruch 21, **dadurch gekennzeichnet, dass** das schalenartige Gehäuse (9) mit der offenen Seite in Richtung auf die Innenverkleidung (6) zeigt.

23. Armlehne nach Anspruch 1, **dadurch gekennzeichnet, dass** ein Teil der Gehäuseanordnung (9) in seinem oberen Bereich eine rohrartige Verlängerung (52) aufweist.

24. Armlehne nach Anspruch 1, **dadurch gekennzeichnet, dass** an dem Armauflagepolster (11) ein nach unten zeigender Kragen (54) vorgesehen ist.

25. Armlehne nach Anspruch 1, **dadurch gekennzeichnet, dass** der Kragen (54) die rohrartige Verlängerung (52) des unteren Teil der Gehäuseanordnung (9) allseitig umgreift derart, dass sich eine Teleskopanordnung ergibt.

26. Armlehne nach Anspruch 1, **dadurch gekennzeichnet, dass** die Schraubspindeln (29,31) und/oder die Führungsstangen (16,17) abschnittsweise durch den rohrartigen Fortsatz (52) verlaufen.

27. Armlehne nach Anspruch 1, **dadurch gekennzeichnet, dass** zumindest die Führungsanordnung (14) zumindest überwiegend außerhalb des Türkorpus (2) angeordnet ist.
